# EUROPEAN PATENT APPLICATION

(11) **EP 4 596 331 A1**
(43) Date of publication of application: **06.08.2025**
(21) Application number: 23885460.8
(22) Date of filing: 06.10.2023
(51) Int. Cl.: B60R 21/207, B60R 21/233, B60R 21/2346

(54) **OCCUPANT RESTRAINT APPARATUS**

(30) Priority: 04.11.2022 JP 2022177056
(71) Applicant: Autoliv Development AB, 44783 Vargarda (SE)
(72) Inventor: KOBAYASHI, Yuto, Yokohama-shi, Kanagawa 222-8580 (JP); SAKURAI, Tsutomu, Yokohama-shi, Kanagawa 222-8580 (JP)
(74) Representative: Müller Verweyen
(86) International application number: PCT/JP2023/036539
(87) International publication number: WO 2024/095697

(57) **Abstract**

To provide an occupant restraint device capable of improving occupant restraint performance and OOP performance by appropriately applying high pressure to necessary locations of an airbag cushion to stabilize the airbag cushion. An airbag cushion 11 having an upper chamber 12 and a lower chamber 13 and that expands and deploys to a side of an occupant 5 in the center of a vehicle; an inflator 20 that ejects gas for expansion of the airbag cushion 11; a baffle 14 that divides the upper chamber 12 and the lower chamber 13; and an internal pressure adjusting means 30 configured to increase the internal pressure in the lower chamber 13 above that of the upper chamber 12 during expansion and deployment. The airbag cushion 11 is configured such that, when viewed from a side perpendicular to the front-to-back direction of the vehicle after expansion and deployment is complete, a part or all of the lower chamber 13 overlaps with a console box 41 provided between adjacent seats of the vehicle.

## Description

### TECHNICAL FIELD

The present invention relates to an occupant restraint device that restrains an occupant sitting on a seat of a vehicle.

### BACKGROUND ART

Conventional airbag devices with occupant restraint performance for far-side impacts are known. In this type of airbag device, the airbag cushion expands and deploys in the center of the vehicle compartment to protect the far side of the occupant.

Patent Document 1 discloses an airbag device provided on a side of a seat backrest part on the central side in a vehicle width direction. In this airbag device, the airbag cushion has a non-expandable portion and an expandable portion that expands when gas is supplied from an inflator. An opening is formed in the non-expandable portion, and a tether is inserted through the opening and connected between the rear end and the front end of the airbag cushion.

### RELATED ART DOCUMENTS

### PATENT DOCUMENTS

Patent Document 1: Japanese Unexamined Patent Application 2012-51557

### SUMMARY OF THE INVENTION

### PROBLEM TO BE SOLVED BY THE INVENTION

In protecting the far-side of occupants, for example, the amount of head movement is an important evaluation item. Various measures have been considered to reduce head movement, but methods that involve increasing the size and pressure of the airbag cushion to achieve the target amount of head movement are often adopted.

For example, the airbag device of Patent Document 1 also has a large-capacity airbag cushion that protects the occupant from the head to the abdomen. Therefore, when the output of the inflator is low, the internal pressure of the airbag cushion increases slowly, which may delay expansion and deployment of the airbag cushion. Furthermore, if the internal pressure of the airbag cushion increases slowly, the position at which the planned rupture part of the side support part begins to rupture may vary, which may cause the deployment behavior of the airbag cushion to become unstable.

If the output of the inflator were simply increased in order to prevent these problems, the high-pressure airbag cushion would expand and deploy from the side support part, which would increase the reaction force from the airbag cushion when the occupant is restrained, resulting in higher head injury values, and the like. In other words, simply increasing the pressure of the airbag cushion may affect the injury reduction performance when an occupant is positioned in an improper position, that is in the expansion and deployment area of the airbag cushion (hereinafter referred to as OOP (Out Of Position) performance).

The inventors of the present application have discovered that improving the configuration of the airbag device and improving the positional relationship between the expanded and deployed airbag cushion and the console box of the center console are effective in achieving both occupant restraint performance and OOP performance.

In light of the circumstances described above, an object of the present invention is to achieve an occupant restraint device that can improve occupant restraint performance by appropriately increasing pressure and stabilizing necessary areas of the airbag cushion, while also improving OOP performance.

### MEANS FOR SOLVING THE PROBLEM

The occupant restraint device of the present invention includes:
an airbag cushion having an upper chamber and a lower chamber that expands and deploys to the side of an occupant in the center of a vehicle;
an inflator that ejects gas to expand the airbag cushion;
a partition wall that divides the upper chamber and the lower chamber; and internal pressure adjusting means configured to adjust the internal pressure of the lower chamber to be higher than that of the upper chamber during expansion and deployment, wherein
when viewed from a side perpendicular to the front-to-back direction of the vehicle after expansion and deployment is complete, a part or all of the lower chamber of the airbag cushion overlaps with a console box provided between adjacent seats of the vehicle.

With the present invention, the internal pressure adjusting means may be an inner tube covering the inflator, where an upper end gas discharge outlet and a lower end gas discharge outlet are provided at the upper end part and lower end part of the inner tube, the lower end gas outlet opens into the lower chamber and the upper end gas outlet opens into the upper chamber, and the opening area of the lower end gas discharge outlet is larger than the opening area of the upper end gas discharge outlet.

With the present invention, the internal pressure adjusting means may be an inner tube covering the inflator, where an upper end gas discharge outlet and a lower end gas discharge outlet are provided at the upper end part and lower end part of the inner tube, the lower end gas discharge outlet opens into the lower chamber and the upper end gas discharge outlet opens into the upper chamber, and the lower end gas discharge outlet is provided with a check valve that restricts backflow of gas supplied that has been supplied to the lower chamber when the internal pressure of the lower chamber becomes greater than a predetermined pressure.

With the present invention, a peripheral edge of the lower end gas discharge outlet is inclined obliquely with respect to the longitudinal direction of the inner tube.

**In** the case described above, the periphery of the lower end gas discharge outlet may be shaped to be inclined downward from the rear to the front of the vehicle.

With the present invention, an inner tube is used in which the opening area in a cross section perpendicular to the longitudinal direction of the cylindrical inflator gradually increases from the upper end gas discharge outlet to the lower end gas discharge outlet.

With the present invention, when an AM50 dummy for a crash test is seated in a normal position on the seat and the airbag cushion is caused to expand and deploy, at least a part of the lower chamber may be positioned between the waist of the AM50 dummy and the console box.

With the present invention, when an AM50 dummy for a crash test is seated in a normal position on the seat and the airbag cushion is expanded and deployed, a first side of the airbag cushion in the vehicle width direction may come into contact with the console box, and a second side of the airbag cushion in the vehicle width direction may come into contact with the AM50 dummy.

The present invention may be configured such that, when the airbag cushion is expanded and deployed and viewed from the side perpendicular to the front-to-back direction of the vehicle, the lower chamber overlaps with the upper edge of the console box.

With the present invention, when the airbag cushion is expanded and deployed and viewed from the front of the vehicle, a thickness of the airbag cushion in the vehicle width direction at a portion below an upper edge of the console box may be shorter than a thickness of the airbag cushion in the vehicle width direction at a portion above the upper edge of the console box.

With the present invention, the partition may be inclined obliquely so that when the airbag cushion is expanded and deployed, the partition is in an upper position toward the rear of the vehicle and in a lower position toward the front of the vehicle.

### [EFFECT OF THE INVENTION]

The occupant restraint device includes an airbag cushion having an upper chamber and a lower chamber that expands and deploys on the side of the occupant toward the center of the vehicle, a cylindrical inflator that ejects gas to expand the airbag cushion, a baffle that divides the upper chamber and the lower chamber, and internal pressure adjusting means. With the present invention, when the airbag cushion expands and deploys, the internal pressure adjusting means causes the pressure in the lower chamber to be higher than that of the upper chamber.

In addition, with the present invention, the airbag cushion is configured to expand and deploy at a position where, when viewed through from the side of the vehicle, a part or all of the lower chamber overlaps with the console box provided between adjacent seats in the vehicle. This enables the lower chamber to obtain supporting force from the console box when restraining the abdomen and waist of the occupant.

With the present invention, the pressure of only the lower chamber is raised high by the internal pressure adjusting means for a period of time sufficient for the lower chamber to restrain the abdomen and waist of the occupant, and the lower chamber is stabilized by the support force obtained from the console box. The occupant restraint device of the present invention can improve the occupant restraint performance by applying high pressure to necessary locations of the airbag cushion to stabilize the airbag cushion.

On the other hand, the occupant restraint device of the present invention does not require increased pressure of the upper chamber, so there is no risk of an increase in head injury value. With the present invention, the lower chamber is stabilized by increasing the internal pressure and obtaining support from the console box, so that the lower chamber supports the lower portion of the upper chamber. As a result, when the airbag cushion expands and deploys, vertical oscillation is reduced, tilting is suppressed, and deployment behavior is stabilized. This also enables the occupant restraint device of the present invention to improve OOP performance.

### BRIEF DESCRIPTION OF THE DRAWINGS

FIG. 1A is a view of an occupant restraint device according to an embodiment, in a state in which an airbag cushion is expanded and deployed, as viewed from the side of a vehicle;
FIG. 1B is a view of the occupant restraint device according to the embodiment, in a state in which the airbag cushion is expanded and deployed, as viewed from the front of the vehicle;
FIG. 1C is a partial enlarged view of a portion where the airbag cushion and the console box in FIG. 1B are in contact with each other.
FIG. 2 is a perspective view of a seat frame forming a framework of a seat in the occupant restraint device according to the embodiment, as viewed from an oblique direction;
FIG. 3(a) is a diagram depicting a longitudinal section of an airbag cushion for an occupant restraint device relating to the embodiment; FIG. 3(b) is a perspective view, as viewed from an oblique direction, of an inner tube in which the opening area of the lower end gas discharge outlet is made larger than the opening area of the upper end gas discharge outlet; and FIG. 3(c) is a diagram depicting a modified example in which the peripheral edge of the lower end gas outlet is inclined.
FIG. 4(a) is a view of an airbag cushion of an occupant restraint device according to Modified Example 1 of the embodiment, as viewed from the side of the vehicle; FIG. 4(b) is a perspective view of the inner tube with a check valve in an open state, as viewed from an oblique direction; and FIG. 4(c) is a perspective view of an inner tube with a check valve in a closed state, as viewed from an oblique direction.
FIG. 5 is a perspective view of an inflator in an occupant restraint device according to Modified Example 2 of the embodiment, as viewed from an oblique direction.
FIG. 6 is a diagram of an occupant restraint device according to Modified Example 3 of the embodiment, in which an airbag cushion is in an expanded and deployed state, as viewed from the side of the vehicle.
FIG. 7 is a view of an airbag cushion in an occupant restraint device according to Modified Example 4 of the embodiment, as viewed from the side of the vehicle.

### DESCRIPTION OF THE PREFERRED EMBODIMENTS

Embodiments of the present invention are described below in detail with reference to the drawings. Note that the following embodiments are examples of the present invention, and are not intended to limit the scope of the present invention, the application thereof, or the uses thereof.

An example of the definition of the term "occupant" in the present invention is an occupant in accordance with a frontal collision test dummy (Hybrid III AM50; human body dummy for frontal collision test set forth in specification [49CFR Part 572 Subpart E and O] of NHTSA [National Highway Traffic Safety Administration]) with a physique equivalent to the average male in the United States; having an approximate size of 175 cm height, 88 cm sitting height, and 78 kg weight. However, the present invention can also be applied for other anthropomorphic test dummies.

In the present specification, the terms "upper" and "upper side" refer to a head direction of an occupant 5 seated in a regular position in a seat 1, and "lower" and "lower side" refer to a foot direction of the occupant 5. Herein, the "regular position" refers to a position in a center of a seat cushion 2 of the seat 1 in the left-right direction with the back of the occupant 5 in contact with the backrest part 3 from an upper part to a lower part. Furthermore, the terms "front" and "front side" refer to a front surface direction of the occupant 5 seated in the seat 1 in the regular position and "rear" and "rear side" refer to a back surface direction of the occupant 5. Furthermore, the terms "left" and "left side" refer to a left-hand direction of the occupant 5 seated in the seat 1 in the regular position, and "right" and "right side" refer to the right-hand direction of the occupant 5.

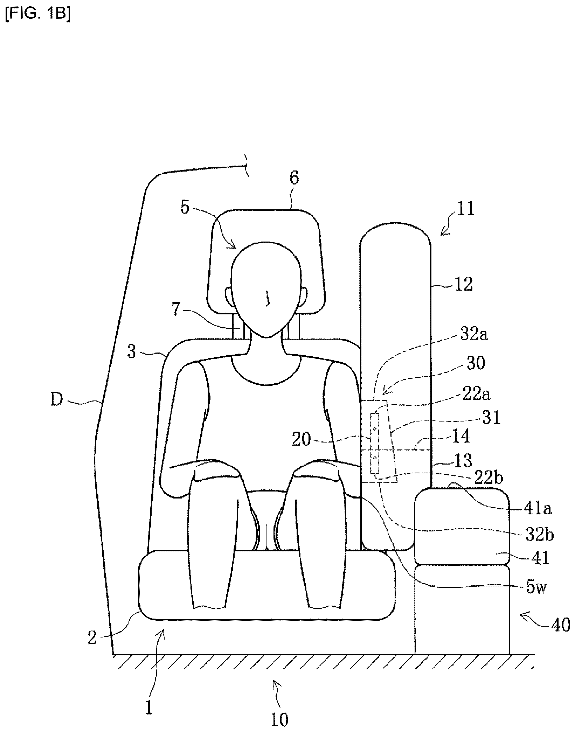

The airbag module constituting the occupant restraint device 10 is installed inside the far side of the backrest part 3 of one of two seats arranged side by side inside the vehicle in the width direction of the vehicle. In FIG. 1B, the side away from the door D of the vehicle is the far side of the seat 1. In the present Embodiment, an example in which an airbag module is provided in a driver's seat 1 is depicted. The airbag module includes an airbag cushion 11 and an inflator 20.

### [Schematic Configuration of Seat]

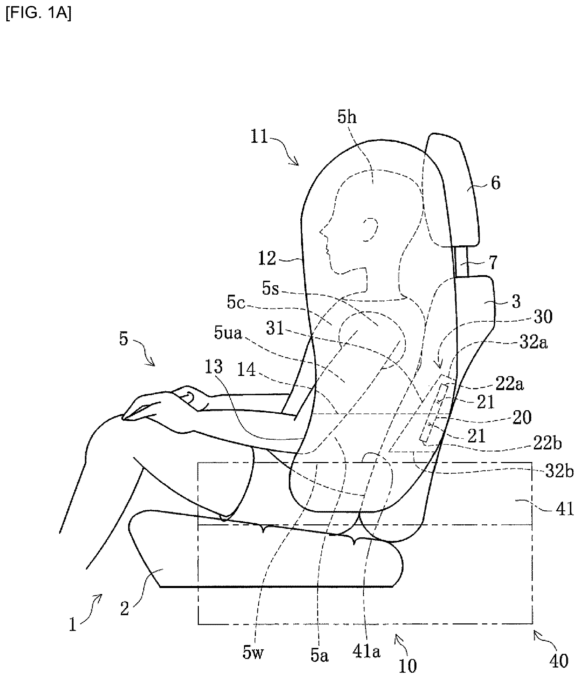

As depicted in FIG. 1A, the seat 1 includes the seat cushion 2 that supports the buttocks and thighs of an occupant 5, and the backrest part 3 that supports the back of the occupant 5. The backrest part 3 is attached to the rear end part of the seat cushion 2 so as to be able to recline. The upper end part of the backrest part 3 has a headrest 6 attached via a rod shaped support member 7. The driver's seat 1 may have the backrest part 3 and the headrest 6 integrally formed.

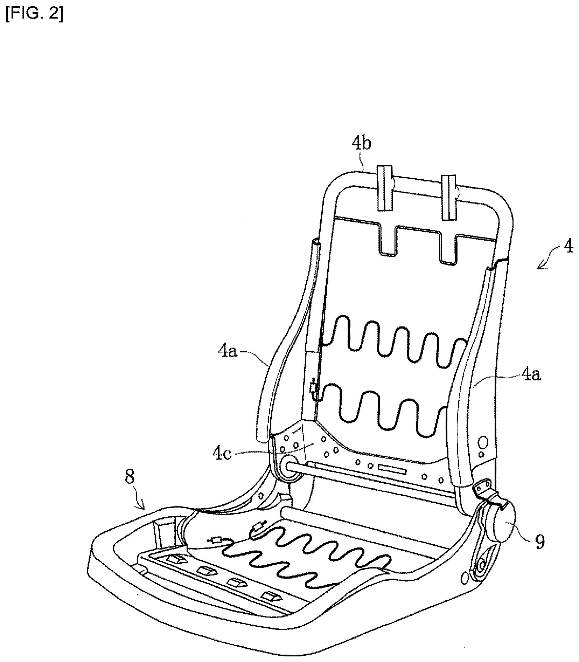

As an example, as depicted in FIG. 2, a seat frame 4 is provided inside the backrest part 3, and a seat frame 8 is disposed under the seat cushion 2. The seat frame 4 and the seat frame 8 are connected via a reclining mechanism 9 to form the framework of the seat 1.

The seat frame 4 includes a pair of side frames 4a extending in the vertical direction of the seat at the right and left ends in the seat width direction inside the backrest part 3, an upper frame 4b connecting the upper end parts of the pair of side frames 4a in the seat width direction, and a lower frame 4c connecting the lower ends of the pair of side frames 4a in the seat width direction. The seat frame 4 is formed in a frame shape by side frames 4a, the upper frame 4b, and the lower frame 4c. The side frame 4a is molded from, for example, metal or resin.

In the seat cushion 2, a pad composed of, for example, urethane foam material is disposed on the upper side of the seat frame 8. In the backrest part 3, a pad is provided on the front side of the seat frame 4a. These pads are covered with a covering material. The skin material is made of elastic fabric or leather.

### [Configuration of Occupant Restraint Device]

As depicted in FIG. 1A and FIG. 1B, the occupant restraint device 10 includes an airbag cushion 11 and an inflator 20. The occupant restraint device 10 has an upper chamber 12 and a lower chamber 13, and is equipped with an airbag cushion 11 that expands and deploys on the side of the occupant 5 toward the center of the vehicle, a cylindrical inflator 20 that ejects gas to expand the airbag cushion 11, and a baffle 14 that divides the upper chamber 12 and the lower chamber 13. The baffle 14 corresponds to a partition wall.

The airbag cushion 11 is a bag made of cloth that is constructed by preparing a required number of base cloths of a required shape in advance and sewing prescribed locations such as the periphery of these base cloths. The airbag cushion 11 may be formed using the so-called "one-piece weaving" technique. The airbag cushion 11 is wound in a roll shape when laid flat, or folded in an accordion shape, for stowing inside the seat 1. The periphery of the airbag cushion 11 in the contracted state is covered with a covering material and is stowed along the side frame 4a of the seat 1.

The inflator 20 is connected to a connecting part provided inside the airbag cushion 11. The inflator 20 is a gas generating device formed in a substantially cylindrical shape, with the axial direction thereof aligned with the longitudinal direction of the side frame 4a of the backrest part 3. The inflator 20 is provided with an upper discharge hole 22a at the upper end part thereof and a lower discharge hole 22b at the lower end part thereof.

The inflator 20 is electrically connected to a controller such as an ECU (Electronic Control Unit). When a side collision of the vehicle is detected or predicted based on signals from sensors such as a side impact detection sensor that detects a side impact of the vehicle and a side impact prediction sensor that predicts a side impact, the inflator 20 is activated by a signal from the ECU. When the inflator 20 is activated, gas is ejected from the upper discharge hole 22a and the lower discharge hole 22b.

The airbag cushion 11 is attached to the side frame 4a of the backrest part 3 by means of two stud bolts 21 provided on the outer surface of the inflator 20 in a protruding manner in the longitudinal direction thereof at an appropriate interval. Furthermore, the stud bolts 21 are passed through the insertion hole of the stowed part of the inflator 20 and secured to the side frame 10, so that the airbag cushion 11 is also secured to the side frame 4a.

The airbag cushion 11 is stowed inside the side support part on the far side of the backrest part 3 of the seat 1, and is expanded by gas generated by the inflator 20. The expansion pressure of the airbag cushion 11 breaks the covering material of the backrest part 3, and the airbag cushion 11 expands and deploys along the outside of the seat 1 to the side of the occupant 5.

The upper chamber 12 has a length in the vertical and front-to-back direction sufficient to receive the side of the torso of the occupant 5, such as a shoulder 5s, chest 5c, and upper arm 5ua. In addition, the upper chamber has a length in the vertical and the front-to-back direction that is sufficient to receive not only the side of the torso of the occupant 5 but also a head 5h. The lower chamber 13 has a length in the vertical and front-to-back direction sufficient to receive the side of the torso of the occupant 5, such as an abdomen 5a and waist 5w. When a side collision or the like occurs, the expanded and deployed airbag cushion 11 restrains the side of the occupant 5 that tends to move in the direction of the impact, thereby restricting movement of the occupant 5.

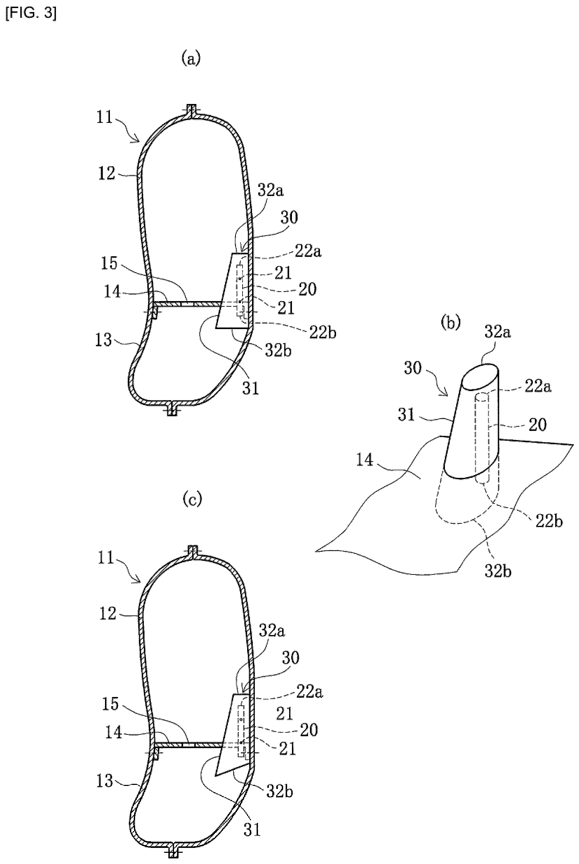

As depicted in FIG. 3(a), the inside of the airbag cushion 11 is divided into an upper chamber 12 and a lower chamber 13 by a baffle 14. When the airbag cushion 11 is expanded and deployed, the baffle 14 extends in the front-to-back direction of the vehicle.

The baffle 14 may have a through hole 15 that is used to supply gas from the lower chamber 13 to the upper chamber 12 to adjust the gas pressure after a certain gas pressure has been achieved in the upper chamber 12 and the lower chamber 13. In addition, the vertical, front-to-back direction, and left-to-right dimensions of the upper chamber 12 and the lower chamber 13 are not limited to those depicted in each drawing, and can be adjusted to suit the shape and arrangement of the seat 1.

The occupant restraint device 10 of the present Embodiment is provided with internal pressure adjusting means 30 configured so that the air pressure in the lower chamber 13 is higher than that in the upper chamber 12 when expanded and deployed.

In the present Embodiment, the internal pressure adjusting means 30 is an inner tube 31 made of a cylindrical body that covers the outside of the inflator 20. The inner tube 31 is a flexible member formed in a cylindrical shape and separate from the base fabric that constitutes the airbag cushion 11. An upper end gas discharge outlet 32a is provided at the upper end part of the inner tube 31, and a lower end gas discharge outlet 32b is provided at the lower end part.

The inner tube 31 has a lower end gas discharge outlet 32b opening into the lower chamber 13 and an upper end gas discharge outlet 32a opening into the upper chamber 12. The inner tube 31 is disposed inside the airbag cushion 11 so that the upper end gas discharge outlet 32a faces the interior of the upper chamber 12 and the lower end gas discharge outlet 32b faces the interior of the lower chamber 13. As depicted in FIG. 3(a), the inner tube 31 of the present Embodiment has a shape in which the opening area of the lower end gas discharge outlet 32b is larger than the opening area of the upper end gas discharge outlet 32a.

In addition, in the present Embodiment, as depicted in FIG. 3(a), the inner tube 31 is shaped so that the opening area in a cross section perpendicular to the longitudinal direction of the cylindrical inflator 20 gradually increases from the upper end gas discharge outlet 32a to the lower end gas discharge outlet 32b. In other words, the diameter of the inner tube 31 in a cross section perpendicular to the longitudinal direction of the inflator 20 increases toward the bottom.

In the present Embodiment depicted in FIG 3(a), the periphery of the lower end gas discharge outlet 32b is shaped to be perpendicular to the longitudinal direction of the cylindrical inner tube 31.

In this regard, as in the modified example of FIG. 3(c), the periphery of the lower end gas discharge outlet 32b may be inclined obliquely with respect to the longitudinal direction of the inner tube 31. More specifically, as depicted in FIG. 3(c), the periphery of the lower end gas discharge outlet 32b may be shaped to be inclined downward from the rear to the front of the vehicle.

In addition, in the present Embodiment, the airbag cushion 11 is configured to expand and deploy at a position where, when viewed from a side perpendicular to the front-to-back direction of the vehicle after expansion and deployment is complete, a portion of the lower chamber 13 overlaps with a console box 41 provided at the top of a center console 40 installed between adjacent seats in the vehicle. Specifically, in the present Embodiment, when viewed from the side of the vehicle, approximately half of the lower chamber 13 overlaps with the console box 41.

### Effects of the Present Embodiment

In the present Embodiment, the occupant restraint device 10 has an upper chamber 12 and a lower chamber 13, and includes an airbag cushion 11 that expands and deploys on the side of the occupant 5 toward the center of the vehicle, a cylindrical inflator 20, and a baffle 14 that divides the upper chamber 12 and the lower chamber 13.

In the present Embodiment, the internal pressure adjusting means 30 is an inner tube 31 that surrounds the inflator 20 and is configured so that the opening area of the lower end gas discharge outlet 32b is larger than the opening area of the upper end gas discharge outlet 32a. As a result, in the present Embodiment, when the airbag cushion 11 is expanded and deployed, the inner tube 31, which has a larger opening area of the lower end gas discharge outlet 32b than the opening area of the upper end gas discharge outlet 32a, allows more gas to flow into the lower chamber 13, thereby raising the pressure of the lower chamber 13 higher than that of the upper chamber 12.

In addition, in the present Embodiment, an inner tube 31 is used in which the opening area in a cross section perpendicular to the longitudinal direction of the cylindrical inflator 20 gradually increases from the upper end gas discharge outlet 32a to the lower end gas discharge outlet 32b. As a result, even if the flow rate of gas flowing into the lower chamber 13 increases, use of an inner tube 31 with a cross-sectional diameter size that increases toward the bottom enables smooth flow of expansion gas into the lower chamber 13.

In the present Embodiment, the occupant 5 is a AM50 dummy (Hybrid III AM50/a dummy for frontal collision tests defined in the NHTSA [National Highway Traffic Safety Administration] standard [49CFR Part572 Subparts E and O]), and when the AM50 dummy is seated in a normal position on the seat 1 and the airbag cushion 11 expands and deploys, at least a part of the lower chamber 13 is located between the waist 5w of the AM50 dummy and the console box 41, as depicted in FIG. 1A and FIG. 1B. As a result, the lower chamber 13 with pressure raised high is positioned between the waist 5w of the occupant 5 and the console box 41, increasing the restraining force on the occupant 5 and improving the restraint performance.

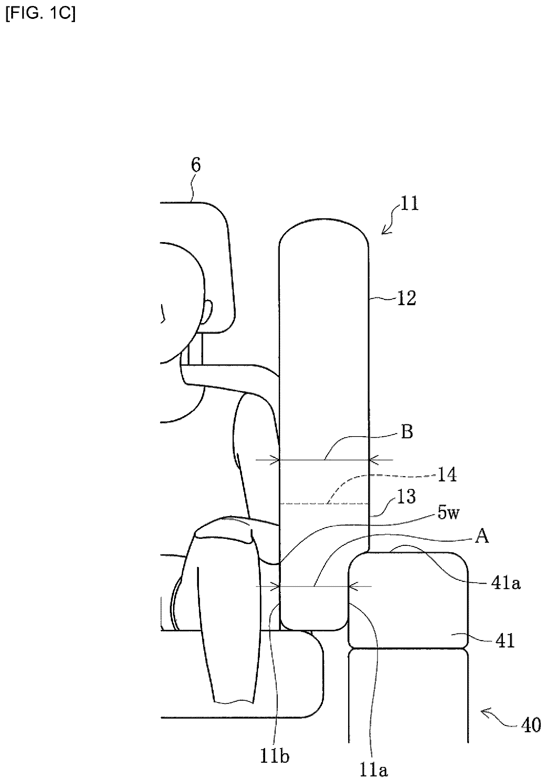

In addition, in the present Embodiment, when the occupant 5 (AM50 dummy) is seated in the correct position on the seat 1 and the airbag cushion 11 is expanded and deployed, as depicted in FIG. 1C, a first side 11a of the airbag cushion 11 in the vehicle width direction comes into contact with the side of the console box 41, and a second side 11b of the airbag cushion 11 in the vehicle width direction comes into contact with the waist 5w, abdomen 5a, and the like of the occupant 5 (AM50 dummy). This ensures that the lower chamber 13 of the airbag cushion 11 can obtain a supporting force from the console box 41 when restraining the waist 5w or the like of the occupant 5. In addition, by stabilizing the lower chamber 13, the protective performance of the upper chamber 12 for the portion of the occupant 5 above the abdomen 5a is also improved.

In the present Embodiment, when the airbag cushion 11 is expanded and deployed and viewed through from a side perpendicular to the front-to-back direction of the vehicle, as depicted in FIG. 1A, the lower chamber 13 is arranged to overlap an upper edge 41a of the console box 41. Specifically, the lower chamber 13 and an upper edge 41a of the console box 41 are in contact with each other as depicted in FIG. 1B. Since the lower chamber 13 is arranged so as to hang on the upper edge 41a of the console box 41, the main part of the lower chamber 13 is located to the side of the console box 41, and the portion of the lower chamber 13 above the upper edge 41a of the console box 41 is also maintained at high pressure. In the present Embodiment, the lower chamber 13 itself is less likely to bend at the upper end of the console box 41, and the protection performance for the upper portion of the abdomen 5a of the occupant 5 can be improved.

In addition, in the present Embodiment, as depicted in FIG. 1C, when the airbag cushion 11 is in an expanded and deployed state and is viewed from the front of the vehicle, with the thickness of the airbag cushion 11 in the vehicle width direction at a portion below the upper edge 41a of the console box 41 defined as A and the thickness of the airbag cushion 11 in the vehicle width direction at a portion above the upper edge 41a of the airbag cushion 11 defined as B, the relationship A<B is satisfied. In other words, the length of thickness A is shorter than the length of thickness B. In this manner, a part of the airbag cushion 11 (more specifically, a part of the lower chamber 13) is sandwiched between the occupant 5 and the side of the console box 41, so that the airbag cushion 11 receives strong supporting force from the console box 41 and is stabilized.

In addition, in the present Embodiment, the airbag cushion 11 is configured to expand and deploy at a position where, when viewed through from the side of the vehicle, a part of the lower chamber 13 overlaps with the console box 41 provided between adjacent seats in the vehicle. As a result, the lower chamber 13 receives a support force from the console box 41 when restraining the abdomen 5a and waist 5w of the occupant 5, as depicted in FIG. 1B.

In the present Embodiment, the pressure in only the lower chamber 13 is raised high by the internal pressure adjusting means 30 for a period of time sufficient for the lower chamber 13 to restrain the abdomen 5a and waist 5w of the occupant 5, and the expanded and deployed lower chamber 13 is stabilized by the support force obtained from the console box 41. The occupant restraint device 10 can improve the occupant restraint performance by increasing the pressure at necessary locations of and stabilizing the airbag cushion 11.

The occupant restraint device 10 of the present Embodiment does not require high pressure in the upper chamber 12, and therefore there is no risk of an increase in the head injury value. In the present Embodiment, the lower chamber 13 is stabilized by increasing the internal pressure and obtaining support force from the console box 41, so that the lower chamber 13 supports the lower portion of the upper chamber 12. As a result, when the airbag cushion 11 expands and deploys, vertical swaying is reduced and tilting is suppressed, resulting in stable deployment behavior. As a result, the occupant restraint device 10 of the present Embodiment can also improve the OOP performance.

Furthermore, if the peripheral edge of the lower end gas discharge outlet 32b is slanted obliquely with respect to the longitudinal direction of the inner tube 31, as in the modified example of Figure 3(c), the lower end gas discharge outlet 32b will have a roughly elliptical shape and will be larger, more readily enabling the opening area of the lower end gas discharge outlet 32b to be larger than the opening area of the upper end gas discharge outlet 32a.

### [Modified Example 1 of the Embodiment]

In the present Modified Example, an inner tube 31 having a different shape from that of the embodiment described above is used as the internal pressure adjusting means 30. An upper end gas discharge outlet 32a is provided at the upper end part of the inner tube 31, and a lower end gas discharge outlet 32b is provided at the lower end part of the inner tube. The inner tube 31 is disposed inside the airbag cushion 11 so that the lower end gas discharge outlet 32b faces the inside of the lower chamber 13 and the upper end gas discharge outlet 32 a faces the inside of the upper chamber 12.

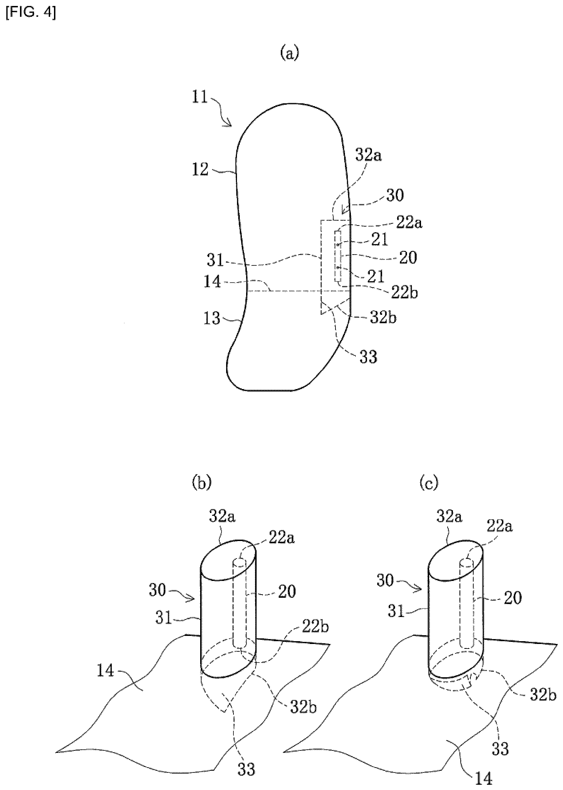

As depicted in FIG. 4, the inner tube 31 of the present Modified Example is equipped with a check valve 33 that folds upward near the lower end of the inner tube 31 when the internal pressure of the lower chamber 13 exceeds a prescribed pressure, thereby regulating the backflow of gas that has been supplied to the lower chamber 13.

As a result, in the present Modified Example, when the airbag cushion 11 is expanded and deployed, after the internal pressure of the lower chamber 13 reaches a prescribed pressure, the check valve 33 acts to restrict the backflow of gas from the lower chamber 13, thereby maintaining the lower chamber 13 at a higher pressure than that of the upper chamber 12 for a long period of time.

In the present Modified Example as well, the upper chamber 12 does not reach a high pressure, and there is no risk of an increase in the head injury value. The lower chamber 13 is stabilized by increasing the internal pressure and obtaining support from the console box 41, and when the airbag cushion 11 expands and deploys, vertical oscillation is reduced and tilting is suppressed.

In the present Modified Example, as depicted in FIG. 4(a), the peripheral edge of the lower end gas discharge outlet 32b is inclined obliquely with respect to the longitudinal direction of the inner tube 31, so that the check valve 33 operates more effectively and the high pressure state in the lower chamber 13 can be maintained more reliably for a longer period of time.

In addition, in the present Modified Example, the peripheral edge of the lower end gas discharge outlet 32b is shaped to slope downward from the rear to the front of the vehicle, which enables the check valve 33 to operate more effectively and reliably maintain the high pressure state in the lower chamber 13.

### [Modified Example 2 of the Embodiment]

In the present Modified Example, the inflator 20 is modified and a gas guide is provided inside the airbag cushion 11 to form internal pressure adjusting means 30.

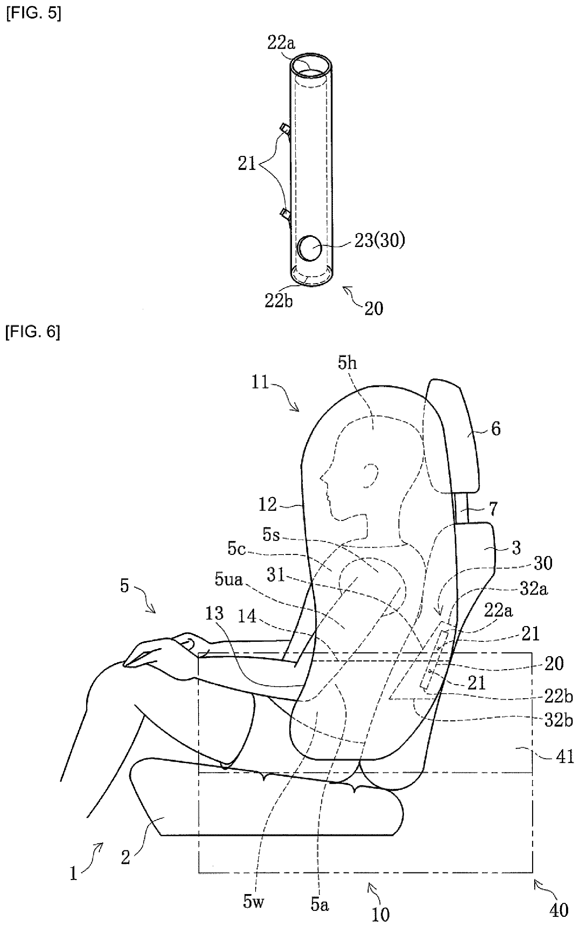

As depicted in FIG. 5, the inflator 20 of the present Modified Example has upper discharge hole 22a which supplies gas so as to expand and deploy the upper chamber 12, and lower discharge hole 22b which supplies gas so as to expand and deploy the lower chamber 13, and further has a side discharge opening 23 on a side surface near the lower end of the inflator 20 to increase the internal pressure of the lower chamber 13.

In the present Modified Example, gas guides are provided at required positions inside the airbag cushion 11. The gas guide guides the gas generated from the inflator 20 that is discharged from the upper discharge hole 22a to the upper chamber 12, and guides the gas that is discharged from the lower discharge hole 22b and the side discharge hole 23 to the lower chamber 13.

As a result, in the event of a side collision of the vehicle, gas is supplied to the upper chamber 12 only from the upper discharge hole 22a, while gas is supplied to the lower chamber 13 from two locations, the lower discharge hole 22b and the side discharge hole 23, thereby increasing the amount of gas flowing into the lower chamber 13.

In the present Modified Example, the upper chamber 12 does not need to reach high pressure, and the OOP performance is not affected. The lower chamber 13 is stabilized by increasing the internal pressure thereof and obtaining support from the console box 41, and the deployment behavior of the airbag cushion 11 when upon expansion and deployment is stabilized.

### [Modified Example 3 of Embodiment]

In the present Modified Example, as depicted in FIG. 6, the airbag cushion 11 is configured to expand and deploy at a position where the entire lower chamber 13 overlaps with a console box 41 installed between adjacent seats in the vehicle when viewed from the side of the vehicle after expansion and deployment is complete.

This enables the lower chamber 13 to obtain stronger supporting force from the console box 41 when restraining the abdomen 5a and waist 5w of the occupant 5. The lower chamber 13 is stabilized by having the pressure thereof raised high and receiving stronger support from the console box 41, and when the airbag cushion 11 expands and deploys, vertical oscillation is reduced and tilting is suppressed.

### [Modified Example 4 of Embodiment]

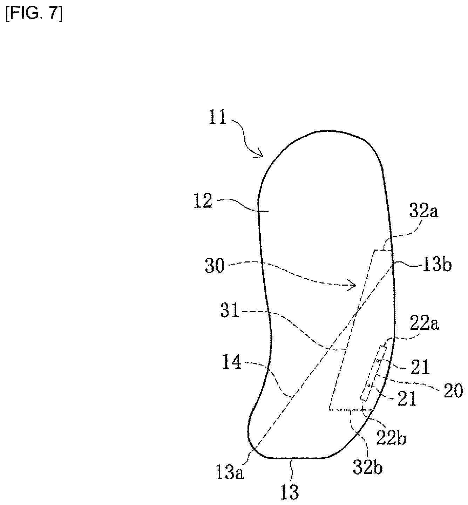

In the present Modified Example, the baffle 14 that divides the upper chamber 12 and the lower chamber 13 is provided at an angle. Specifically, as depicted in FIG. 7, the baffle 14 in the present Modified Example is inclined obliquely such that upon expansion and deployment, the airbag cushion is positioned at an upper position on the vehicle rear side of the airbag cushion 11 and at a lower position on the vehicle front side. As a result, in the present Modified Example, the area on the back side of the occupant 5 that is restrained by the lower chamber 13 at high pressure can be increased.

In the present Modified Example, the front edge part 13a of the portion of the lower chamber 13 in contact with the baffle 14 is provided at a position that is diagonally downward toward the front direction of the vehicle. On the other hand, the rear edge part 13b of the portion of the lower chamber 13 in contact with the baffle 14 is provided at a position that is obliquely upward toward the rear direction of the vehicle. By providing the baffle 14 at an angle in this manner, the lower chamber 13 can be readily provided so as to overlap the upper edge 41a of the console box 41. By providing the lower chamber 13 so as to hang over the upper edge 41a of the console box 41, the portion of the lower chamber 13 above the upper edge 41a is maintained at high pressure. This makes it difficult for the lower chamber 13 to bend at the upper end of the console box 41, and improves the protection performance for the upper portion of the abdomen 5a of the occupant 5.

In the present Modified Example, the inner tube 31 is also installed inside the airbag cushion 11 so that the lower end gas discharge outlet 32b faces into the lower chamber 13 and the upper end gas discharge outlet 32a faces into the upper chamber 12. In the present Modified Example, the length of the inner tube 31 in the vertical direction may be increased as much as necessary.

### [Other Modified Examples]

In the embodiment described above, the inflator 20 may be divided into a plurality of parts, or a plurality of parts may be prepared in advance, and the expansion gas flow rate may be individually set by adjusting the amount of gas generating agent according to the set pressure of each part. In this case, the internal pressure adjusting means 13 may be formed by connecting an inflator with a low expansion gas flow rate to the upper chamber 12 and connecting an inflator with a high expansion gas flow rate to the lower chamber 13.

In the embodiment described above, the configurations indicated in the respective modified examples may be combined. For example, when an inner tube 31 is used as the internal pressure adjusting means 30, a configuration in which the opening areas of the upper and lower end gas discharge outlets 32a, 32b are different from each other may be combined with a configuration in which the check valve 33 is provided at the lower end gas discharge outlet 32b. Also, the configuration using the inner tube 31 may be combined with the configuration of the inflator 20 having the side discharge hole 23 depicted in FIG. 5

In the embodiment described above, the airbag module constituting the occupant restraint device 10 may be stowed inside the far side of the backrest part of the passenger seat.

In the above-described embodiment, the occupant restraint device 10 is not limited to being installed in the front seat of the vehicle, but may also be installed in the rear seat. When the second or third row seats of a vehicle are arranged side by side in the width direction of the vehicle, the occupant restraint device 10 may be provided in the second or third row seats.

### [INDUSTRIAL APPLICABILITY]

The configuration of the present invention is not dependent on a specific vehicle type, and can be applied to any vehicle.

### [EXPLANATION OF CODES]

1. Seat
2. Seat cushion
3. Backrest part
5. Occupant
10. Occupant restraint device
11. Airbag cushion
11a. First side
11b. Second side
12. Upper chamber
13. Lower chamber
13a. Front edge part
14. Baffle (partition wall)
20. Inflator
21. Stud bolt
22a. Upper discharge hole
22b. Lower discharge hole
23. Side discharge hole
30. Internal pressure adjusting means
31. Inner tube
32a. Upper end gas discharge outlet
32b. Lower end gas discharge outlet
33. Check valve
41. Console box
41a. Upper edge

## Claims

1. An occupant restraint device, comprising:
an airbag cushion having an upper chamber and a lower chamber that expands and deploys to the side of an occupant in the center of a vehicle;
an inflator that ejects gas to expand the airbag cushion;
a partition wall that divides the upper chamber and the lower chamber; and
internal pressure adjusting means configured to adjust the internal pressure of the lower chamber to be higher than that of the upper chamber during expansion and deployment, wherein
when viewed from a side perpendicular to the front-to-back direction of the vehicle after expansion and deployment is complete, a part or all of the lower chamber of the airbag cushion overlaps with a console box provided between adjacent seats of the vehicle.

2. The occupant restraint device according to claim 1, wherein the internal pressure adjusting means is an inner tube covering the inflator, an upper end gas discharge outlet and a lower end gas discharge outlet are provided at the upper end part and lower end part of the inner tube, where the lower end gas outlet opens into the lower chamber and the upper end gas outlet opens into the upper chamber, and the opening area of the lower end gas discharge outlet is larger than the opening area of the upper end gas discharge outlet.

3. The occupant restraint device according to claim 1, wherein the internal pressure adjusting means is an inner tube covering the inflator, an upper end gas discharge outlet and a lower end gas discharge outlet are provided at the upper end part and lower end part of the inner tube, the lower end gas discharge outlet opens into the lower chamber and the upper end gas discharge outlet opens into the upper chamber, and the lower end gas discharge outlet is provided with a check valve that restricts backflow of gas supplied that has been supplied to the lower chamber when the internal pressure of the lower chamber becomes greater than a predetermined pressure.

4. The occupant restraint device according to claim 2 or 3, wherein a peripheral edge of the lower end gas discharge outlet is inclined obliquely with respect to the longitudinal direction of the inner tube.

5. The occupant restraint device according to claim 4, wherein the peripheral edge is shaped to slope downward from the rear to the front of the vehicle.

6. The occupant restraint device according to claim 2 or 3, wherein the inner tube has a shape in which an opening area in a cross section perpendicular to the longitudinal direction of the inflator gradually increases from the upper end gas discharge outlet to the lower end gas discharge outlet.

7. The occupant restraint device according to claim 1, wherein when an AM50 dummy for a crash test is seated in a normal position on the seat and the airbag cushion is caused to expand and deploy, at least a part of the lower chamber is positioned between the waist of the AM50 dummy and the console box.

8. The occupant restraint device according to claim 1, wherein when an AM50 dummy for a crash test is seated in a normal position on the seat and the airbag cushion is expanded and deployed, a first side of the airbag cushion in the vehicle width direction comes into contact with the console box, and a second side of the airbag cushion in the vehicle width direction comes into contact with the AM50 dummy.

9. The occupant restraint device according to claim 1, wherein when the airbag cushion is expanded and deployed and viewed from a side perpendicular to the front-to-back direction of the vehicle, the lower chamber is provided so as to overlap an upper edge of the console box.

10. The occupant restraint device according to claim 1, wherein when the airbag cushion is expanded and deployed and viewed from the front of the vehicle, a thickness of the airbag cushion in the vehicle width direction at a portion below an upper edge of the console box is shorter than a thickness of the airbag cushion in the vehicle width direction at a portion above the upper edge of the console box.

11. The occupant restraint device according to claim 1, wherein the partition is inclined obliquely so that when the airbag cushion is expanded and deployed, the partition is in an upper position toward the rear of the vehicle and in a lower position toward the front of the vehicle.
